# EUROPÄISCHE PATENTSCHRIFT

(11) **EP 3 381 721 B1**
(45) Veröffentlichungstag und Bekanntmachung des Hinweises auf die Patenterteilung: **09.12.2020**
(21) Anmeldenummer: 18163321.5
(22) Anmeldetag: 22.03.2018
(51) Int. Cl.: B60G 17/04, B60G 21/06, B60G 17/033, B62D 33/06

(54) **FEDERUNGSSYSTEM**
SUSPENSION SYSTEM
SYSTÈME DE SUSPENSION

(30) Priorität: 29.03.2017 DE 102017205336
(43) Veröffentlichungstag der Anmeldung: 03.10.2018
(73) Patentinhaber: Deere & Company, Moline, IL 61265 (US)
(72) Erfinder: Ballaire, Frederic, 68163 Mannheim (DE)
(74) Vertreter: Dehnhardt, Florian Christopher

(56) Entgegenhaltungen:
- DE-A1-102008 012 704
- DE-A1-102015 007 075
- US-A1- 2013 099 456

## Beschreibung

Die Erfindung betrifft ein Federungssystem, insbesondere eine Kabinenfederung, umfassend mindestens einen Hydraulikzylinder mit einem Kolbenraum und einem Stangenraum, wobei der Hydraulikzylinder mit mindestens einem Hydrospeicher zum Einfedern und Ausfedern in Verbindung steht.

Solche Federungssysteme kommen beispielsweise bei Arbeitsmaschinen wie Traktoren oder dergleichen zum Einsatz. Um dem Fahrer einen möglichst großen Komfort zu bieten, können Arbeitsmaschinen neben den üblichen Fahrwerksfederungen zusätzlich mit einer Kabinenfederung ausgestattet sein.

Bei herkömmlichen Systemen ist zur Gewährleistung einer möglichst gleichmäßigen Dämpfung des Federungssystems häufig eine aufwendige Regelungstechnik erforderlich. Dabei wird meist eine kostspielige Sensorik benötigt, die den hydraulischen Zustand des jeweiligen Hydraulikzylinders erfasst.

Die EP 2 197 697 B1 beschreibt ein Federungssystem, insbesondere eine Kabinenfederung, die einen Hydraulikzylinder aufweist, der mit einem Hydrospeicher in Verbindung steht. Das System umfasst ein Drosselventil mit zwei Drosseln. Beim Einfedern des Hydraulikzylinders fließt der gesamte aus dem Kolbenraum verdrängte Fluidstrom zunächst über die erste Drossel und teilt sich dann in einen Teilstrom auf, der in den Hydrospeicher fließt und einen Teilstrom, der in den Stangenraum des Hydraulikzylinders fließt.

Beim Ausfedern strömt der gesamte aus dem Stangenraum verdrängte Fluidstrom über die zweite Drossel zum Kolbenraum des Hydraulikzylinders, wobei zusätzlich Fluid aus dem Hydrospeicher in den Kolbenraum eingespeist wird.

Die beiden Drosseln weisen Öffnungsquerschnitte auf, die dem Verhältnis von Kolben- zu Ringfläche des Hydraulikzylinders entsprechen. Dadurch wird bei gleicher Ventilstellung die Bewegung beim Einfedern und Ausfedern gleichmäßig gedämpft, da der Fluidstrom in Abhängigkeit der Bewegungsrichtung entweder über die eine oder die andere Drossel fließt. Diese Konstruktion mit zwei Drosseln ist aufwendig und erfordert einen hohen Aufwand um die Drosseln zu dimensionieren, bedingt Leistungsverluste, die beispielsweise auch zu einer Erwärmung der Hydraulikflüssigkeit führen können. Weiterhin werden die Bauteile während des Betriebs verhältnismäßig stark belastet.

DE102015007075 beschreibt ein Dämpfungssystem mit mindestens einem pro Hydraulikzylinder angeschlossenen Hydrospeicher.

DE102008012704 zeigt nach dem Oberbegriff des Anspruchs 1 eine hydraulische Federungsanordnung mit Druckspeichern für den Kolbenraum und den Stangenraum.

Aufgabe der Erfindung ist es, ein Federungssystem anzugeben, das einen einfachen Aufbau mit verhältnismäßig wenigen Komponenten aufweist und dabei gleichzeitig eine definierte, gegebenenfalls einstellbare, Dämpfung gewährleistet. Das System soll sich durch eine lange Lebensdauer und eine zuverlässige Betriebsweise auszeichnen. Dabei soll im Betrieb die Belastung der einzelnen Komponenten möglichst gering sein und Leistungsverluste sollen minimiert werden. Die Dämpfung des Federungssystems soll beim Einfedern und Ausfedern möglichst identisch sein, wobei die Dämpfung gezielt einstellbar sein soll. Die Steifigkeit der Federung soll unabhängig von der Dämpfung wählbar, beziehungsweise einstellbar sein. Weiterhin sollen mit dem Federungssystem unerwünschte Neigungen, beispielsweise einer Kabine bei einer Kurvenfahrt, vermieden werden.

Diese Aufgabe wird erfindungsgemäß durch ein Federungssystem mit den Merkmalen des Anspruchs 1 gelöst. Bevorzugte Varianten sind den Unteransprüchen, der Beschreibung und den Zeichnungen zu entnehmen.

Erfindungsgemäß weist das System eine Verzweigung auf zur Aufteilung eines Fluidstroms aus dem Kolbenraum beim Einfedern in einen Teilstrom, der zu einem Stangenraum eines Hydraulikzylinders fließt und einen Teilstrom, der durch ein Drosselventil zu einem Hydrospeicher fließt. Durch die erfindungsgemäße Aufteilung fließt beim Einfedern nicht der gesamte Fluidstrom aus dem Kolbenraum des Hydraulikzylinders über die Drossel sondern nur ein Teilstrom. Vor der Drossel wird der andere Teilstrom abgezweigt und wird unmittelbar zurückgeführt in einen Stangenraum eines Hydraulikzylinders. Dabei kann es sich um den Stangenraum des gleichen Hydraulikzylinders handeln oder um den Stangenraum eines anderen Hydraulikzylinders. Dadurch, dass nicht der gesamte Fluidstrom über die Drossel geführt wird, werden Leistungsverluste, wie beispielsweise Druckverluste, reduziert und auch eine Erwärmung der Hydraulikflüssigkeit wird minimiert. Weiterhin wird die Drossel nicht so stark belastet, was sich auch positiv auf die Lebensdauer des Federungssystems auswirken kann. Die Erfindung ermöglicht auch eine Verkleinerung der Drossel. Dies wirkt sich günstig auf den benötigten Bauraum aus. Dadurch wird eine kompakte Konstruktion geschaffen. Das erfindungsgemäße Federungssystem gewährleistet gleichzeitig eine definierte und präzise einstellbare Dämpfung, wobei die Steifigkeit des Federungssystems beim Ein- und Ausfedern beeinflusst werden kann, mittels einem Vorspannungsdruck im Hydrospeicher. Das erfindungsgemäße Federungssystem ermöglicht eine variable Drosselung und kommt dabei mit sehr wenigen Bauteilen aus. Es ist nur ein verhältnismäßig geringer Regelungsaufwand erforderlich, dadurch wird eine präzise Ansteuerungsgenauigkeit gewährleistet und Beeinträchtigungen werden vermieden. Weiterhin weist das erfindungsgemäße Federungssystem einen geringen Platzbedarf auf. Dadurch lässt sich das System kostengünstig realisieren und gewährleistet eine hohe Zuverlässigkeit. Zudem ist es wenig störungsanfällig und kostengünstig herstellbar.

Als besonders günstig erweist es sich, wenn beim Ausfedern der gesamte Fluidstrom aus dem Stangenraum durch das Drosselventil fließt, ohne dass es zuvor zu einer Aufteilung kommt.

Dabei erweist es sich als besonders günstig, wenn beim Einfedern und Ausfedern bei gleicher Verfahrgeschwindigkeit ungefähr gleichgroße Mengen durch das Drosselventil fließen, wobei die Abweichung der Volumenströme zwischen dem Ein- und Ausfedern maximal 20 %, vorzugsweise maximal 10 %, insbesondere maximal 5 % beträgt. Bei einer besonders günstigen Variante der Erfindung entspricht der Fluidstrom, der beim Einfedern durch die Drossel des Ventils fließt, weitgehend dem Fluidstrom, der beim Ausfedern über die Drossel des Ventils fließt.

Bei einer besonders günstigen Variante der Erfindung kommt ein Proportionaldrosselventil zum Einsatz. Durch den Einsatz des Proportionaldrosselventils besteht die Möglichkeit, beim Ein- und Ausfedern des Zylinders den Ansteuervorgang bei identischer Dämpfung nur einmalig durchführen zu müssen und gleichzeitig definiert zu drosseln.

Bei einer besonders günstigen Variante der Erfindung ist im Stangenraum eine Stange angeordnet, die nahezu den gleichen Querschnitt aufweist, wie eine Ringfläche, die um die Stange des Kolbens herum gebildet wird. Der Querschnitt der Stange weicht dabei maximal 15%, vorzugsweise maximal 10 % insbesondere maximal 5 % vom Querschnitt der Ringfläche ab. Bei einer besonders günstigen Variante der Erfindung,

Bei einer besonders günstigen Variante der Erfindung entspricht der Querschnitt der Stange dem Querschnitt der Ringfläche, die um die Stange des Kolbens herum gebildet wird.

Beim Einfedern um einen gewissen Stellweg des Kolbens wird eine Fluidmenge aus dem Kolbenraum verdrängt, welche der Fläche des Kolbens multipliziert mit diesem Stellweg entspricht. Beim Ausfedern wird aus dem Stangenraum eine Fluidmenge verdrängt, welche der Ringfläche um die Stange multipliziert mit dem jeweiligen Stellweg entspricht. Die Differenz dieser beiden Volumina beim Einfedern und beim Ausfedern, bei einem gleichen Stellweg, entspricht einem Fluidvolumen, das sich aus dem Produkt der Querschnittsfläche der Stange und dem entsprechenden Stellweg ergibt. Entspricht die Querschnittsfläche der Stange der Ringfläche, dann ist beim Einfedern der Teilstrom, welcher wird in einen Stangenraum des Hydraulikzylinders zurückgeführt genau so groß wie der Teilstrom, der dann über die Drossel des Ventils geführt wird. Dabei wird vorausgesetzt, dass die Verfahrgeschwindigkeit des Kolben beim Einfedern und Ausfedern gleich groß ist. Durch diese Ausgestaltung wird beim Ein- und Ausfedern eine identische Dämpfung gewährleistet.

Bei einer besonders vorteilhaften Variante der Erfindung kommt pro Hydraulikzylinder nur eine Drossel zum Einsatz, über welche Fluidströme beim Einfedern und Ausfedern fließen. Im Gegensatz zu herkömmlichen Varianten nach dem Stand der Technik sind somit nicht zwei Drosseln erforderlich, um eine identische Dämpfung zu gewährleisten, sondern nur eine Drossel.

Vorzugsweise fließt beim Ausfedern der gesamte Fluidstrom aus dem Stangenraum durch das Drosselventil. Als besonders günstig erweist es sich, wenn der beim Ausfedern erzeugte Fluidstrom aus dem Stangenraum über die gleiche Drossel fließt wie der beim Einfedern erzeugte Teilstrom, wobei der Fluidstrom aus dem Kolbenraum beim Einfedern vor der Drossel aufgeteilt wird in einen Teilstrom, welcher unmittelbar zurückfließt in einen Stangenraum eines Hydraulikzylinders und einen Teilstrom, der durch die Drossel geführt wird.

Bei der Erfindung umfasst das Federungssystem Rückflussverhinderer, die in eine Durchflussrichtung sperren und in die andere Durchflussrichtung öffnen. Vorzugsweise handelt es sich bei den Rückflussverhinderern um Rückschlagarmaturen, wobei insbesondere Rückschlagventile zum Einsatz kommen.

Bei einer besonders günstigen Variante der Erfindung ist in einem Fluidweg zwischen dem Kolbenraum und dem Drosselventil ein Rückflussverhinderer angeordnet, der sich beim Einfedern öffnet und beim Ausfedern sperrt.

Ergänzend oder alternativ kann in einem Fluidweg zwischen dem Kolbenraum und dem Hydrospeicher ein Rückflussverhinderer angeordnet sein, der sich beim Einfedern sperrt und beim Ausfedern öffnet.

Bei der Erfindung ist mindestens ein Hydraulikzylinder mit einem weiteren Hydraulikzylinder über eine Kreuzschaltung verbunden. Durch die kreuzweise Verschaltung der Zylinder wird eine verbesserte Wankstabilität erreicht. Dadurch wird beispielsweise ein unerwünschtes Wegbiegen der Kabine bei einer Kurvenfahrt durch das Wegsinken nur eines Hydraulikzylinders wirksam verhindert.

Vorzugsweise fließt beim Einfedern der gesamte Teilstrom vom Kolbenraum zum Hydrospeicher durch das Drosselventil. Eine Bypassströmung unmittelbar zu einem Hydrospeicher wird vermieden. Dadurch wird eine definierte, einstellbare Dämpfung gewährleistet.

Die Fluidströme teilen sich beim Einfedern vorzugsweise im gleichen Verhältnis auf, sodass der Teilstrom, der in den Stangenraum eines Hydraulikzylinders fließt, genauso groß ist wie der Teilstrom, der durch die Drossel zu einem Hydrospeicher geleitet wird.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 eine schematische Darstellung einer Kabinenfederung eines Traktors in seitlicher Ansicht,
Figur 2 eine schematische Darstellung einer Kabinenfederung eines Traktors von hinten gesehen,
Figur 3 eine perspektivische Darstellung einer Kabinenfederung,
Figur 4 ein Federungssystem mit einem Hydraulikzylinder beim Einfedern,
Figur 5 ein Federungssystem mit einem Hydraulikzylinder beim Ausfedern,
Figur 6 ein Verhältnis eines Stangenquerschnitts zu einer Ringfläche auf der Stangenseite,
Figur 7 ein erfindungsgemäßes Federungssystem mit zwei Hydraulikzylindern in Kreuzverschaltung,
Figur 8 eine vereinfachte Darstellung der Kreuzverschaltung beim Einfedern,
Figur 9 eine vereinfachte Darstellung der Kreuzverschaltung beim Ausfedern.

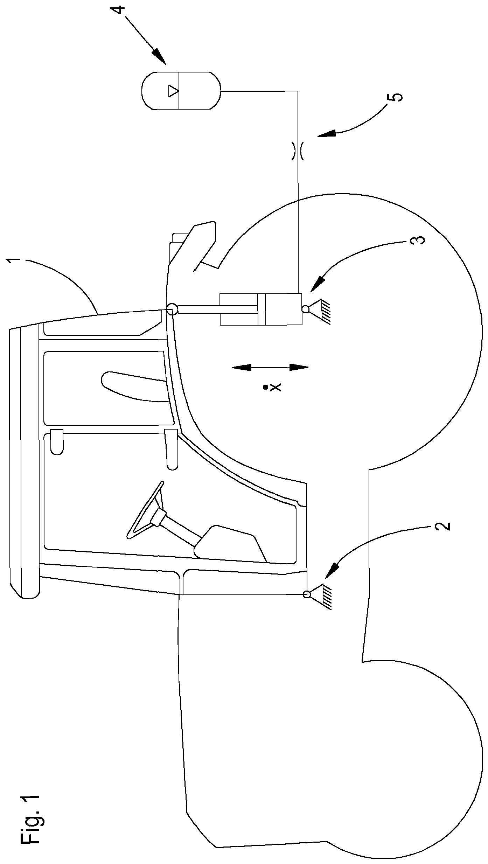

Figur 1 zeigt eine schematische Darstellung eines Traktors mit einer Kabinenfederung. Die Kabine 1 ist in Fahrtrichtung gesehen an ihrer Vorderseite über eine Lagerung 2 und an ihrer Hinterseite über Hydraulikzylinder 3 abgestützt. Die Hydraulikzylinder 3 stehen mit einem Hydrospeicher 4 in Verbindung. In einem Fluidweg zwischen dem Hydraulikzylinder 3 und dem Hydrospeicher 4 ist eine Drossel 5 angeordnet. Die Hydraulikzylinder 3 gewährleisten eine Federung, insbesondere von vertikalen Bewegungen der Kabine 1.

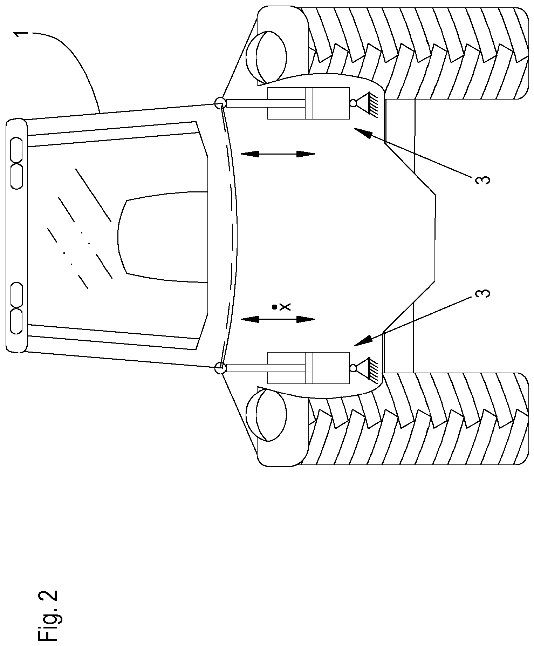

Figur 2 zeigt eine schematische Ansicht des Traktors von hinten. Man erkennt, dass die Kabine 1 des Traktors über zwei Hydraulikzylinder 3 gefedert ist.

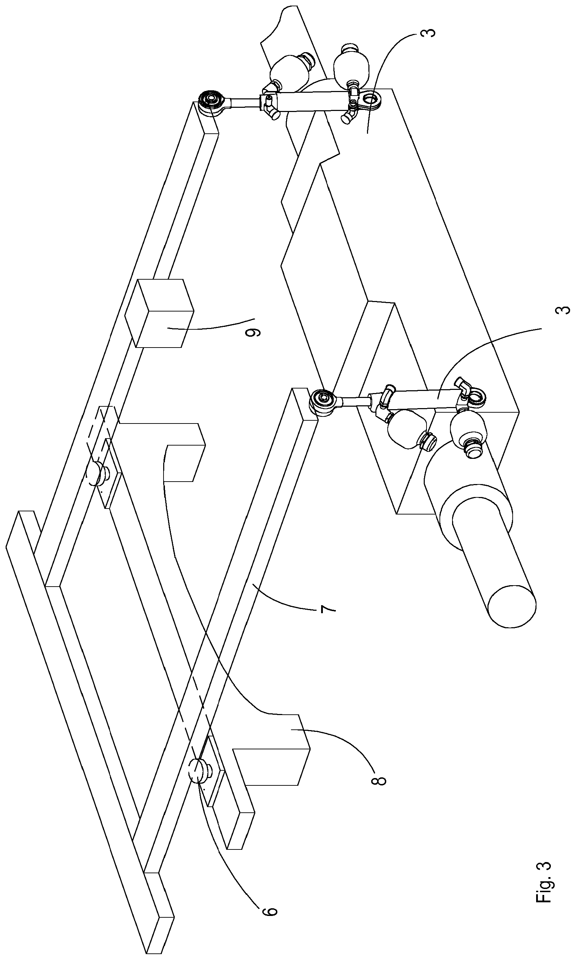

Figur 3 zeigt eine perspektivische Darstellung der Kabinenfederung. Das vordere Lager 2 umfasst zwei elastische Elemente 6, die im Ausführungsbeispiel als Gummiklötze ausgeführt sind. Die elastischen Elemente 6 verbinden einen Rahmen 7 der Kabine mit dem Fahrgestell 8 des Fahrzeugs.

Die elastischen Elemente 6 sorgen für eine Entkopplung der Bewegungen des Fahrgestells 8 von dem Rahmen 7 der Kabine 1. An der Hinterseite wird der Rahmen 7 der Kabine 1 vom Fahrgestell 8 über die Hydraulikzylinder 3 in ihren Bewegungen entkoppelt. Die Kabinenfederung umfasst ein Positionierungssystem 9. Das Positionierungssystem 9 bringt die Kabine je nach Belastung in eine anfängliche Ruheposition. Je nach Gewicht des Fahrers kann das Positionierungssystem 9 die Kabine in eine entsprechende Ausgangslage bringen, sodass unabhängig vom Eigengewicht des Fahrers immer die gleiche Ausgangslage des Federungssystems hergestellt wird. Dazu weist das Positionierungssystem 9 entsprechende Sensoren auf, um die Stellung der Hydraulikzylinder 3 entsprechend einzustellen.

Das Positionierungssystem 9 ist Teil der Kabinenfederung. Das Positionierungssystem 9 ist Stand der Technik, somit wird bei der weiteren Beschreibung der Erfindung nicht näher darauf eingegangen.

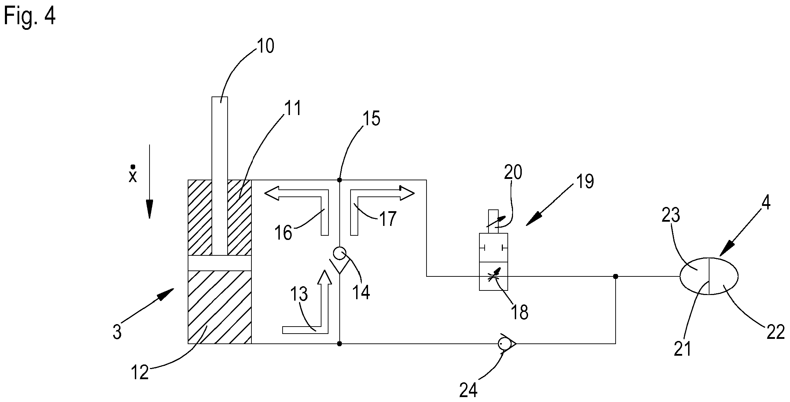

Figur 4 zeigt einen Hydraulikzylinder 3 eines Federungssystems beim Einfedern. Beim Einfedern bewegt sich der Kolben 10 des Hydraulikzylinders 3 nach unten. Der Hydraulikzylinder 3 umfasst einen Stangenraum 11 und einen Kolbenraum 12.

Beim Einfedern wird durch die Bewegung des Kolbens 10 nach unten um einen bestimmten Stellweg ein Fluidstrom 13 aus dem Kolbenraum 12 des Hydraulikzylinders 3 erzeugt. Der Fluidstrom 13 fließt über einen Rückflussverhinderer 14, welcher beim Einfedern öffnet. An einer Verzweigung 15 teilt sich der Fluidstrom 13 in einen Teilstrom 16, der in den Stangenraum 11 des Hydraulikzylinders 3 fließt und einen Teilstrom 17, der durch die Drossel 18 eines Drosselventils 19 zu dem Hydrospeicher 4 fließt. Das Drosselventil 19 umfasst einen Antrieb 20, der im Ausführungsbeispiel als elektromagnetischer Stellantrieb ausgebildet ist. Das Drosselventil 19 umfasst Anschlüsse für die entsprechenden Fluidwege. Das Drosselventil 19, welches in der Grundstellung (meist stromlos) komplett geschlossen ist oder einen vorgebbaren drosselnden Anfangs-Öffnungsquerschnitt hat, gibt proportional zum Einstellweg einen sich zusehends vergrößernden Fluidquerschnitt frei. Es besteht auch die Möglichkeit, dass das Drosselventil 19 in der Grundstellung (in der Regel stromlos) komplett geöffnet ist und dann über den Einstellweg proportional geschlossen wird. Der Antrieb 20, umfasst eine nicht dargestellte Rückstellfeder. Über die Rückstellfeder lässt sich das Drosselventil 19 in seine Ausgangsstellung zurückbringen.

Der Hydrospeicher 4 wird im Ausführungsbeispiel von einem Membranspeicher gebildet. Dabei weist der Hydrospeicher 4 eine Trennmembran 21 auf, die eine Gasseite 22 von einer Fluidseite 23 trennt. Der Hydrospeicher 4 lässt sich in Abhängigkeit des Fluiddruckes auf der Gasseite 22 vorspannen und bildet ein Energiereservoir für die eingespeicherte hydraulische Energie.

Das Federungssystem umfasst einen weiteren Rückflussverhinderer 24, der beim Einfedern geschlossen ist und somit eine Fluidströmung vom Kolbenraum 12 des Hydraulikzylinders 3 direkt zum Hydrospeicher 4 verhindert. Der Rückflussverhinderer 24 gewährleistet somit, dass keine Bypassströmung erfolgt, so dass der Fluidstrom vom Kolbenraum 12 des Hydraulikzylinders 3 zum Hydrospeicher 4 über die Drossel 18 des Drosselventils 19 geführt wird.

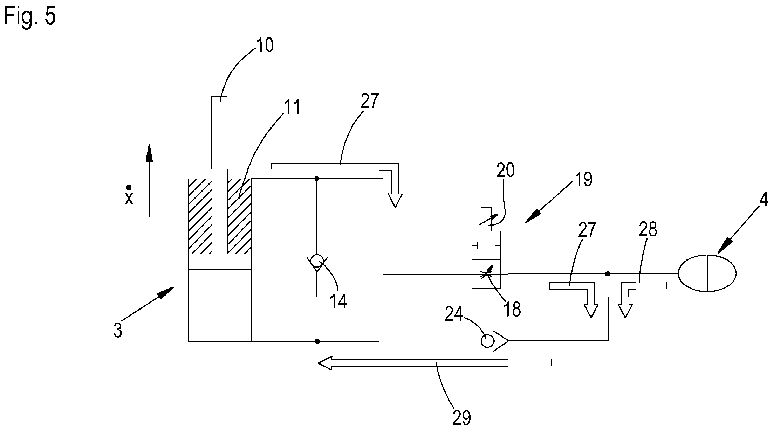

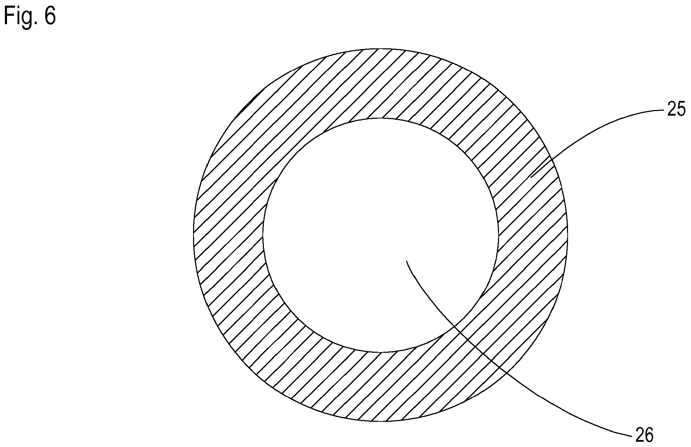

Figur 5 zeigt das Federungssystem beim Ausfedern. Dabei bewegt sich der Kolben 10 gemäß der dargestellten Pfeilrichtung nach oben und es wird ein Fluidvolumen aus dem Stangenraum 11 des Hydraulikzylinders 3 verdrängt, welches dem Stellweg des Kolbens multipliziert mit der Ringfläche 25 entspricht, die um die Querschnittsfläche 26 der Stange ausgebildet ist. Die beiden Flächen 25, 26 sind in Figur 6 dargestellt.

Beim dem in Figur 5 dargestellten Ausfedern wird ein Fluidstrom 27 aus dem

Stangenraum 11 des Hydraulikzylinders 3 erzeugt. Der Rückflussverhinderer 14 ist beim Ausfedern geschlossen und verhindert eine Strömung zum Kolbenraum 12 des Hydraulikzylinders 3. Der Fluidstrom 27 aus dem Stangenraum 11 des Hydraulikzylinders 3 fließt vollständig über die Drossel 18 des Drosselventils 19. An einer Verzweigung wird zu dem Fluidstrom 27 ein weiterer Fluidstrom 28 aus dem Hydrospeicher 4 zugespeist. Ein Fluidstrom 29, der sich aus dem Fluidstrom 27 aus dem Stangenraum und dem eingespeisten Fluidstrom 28 aus dem Hydrospeicher 4 zusammensetzt, fließt über den Rückflussverhinderer 24 zum Kolbenraum 12 des Hydraulikzylinders 3. Der Rückflussverhinderer 24 ist beim Ausfedern geöffnet.

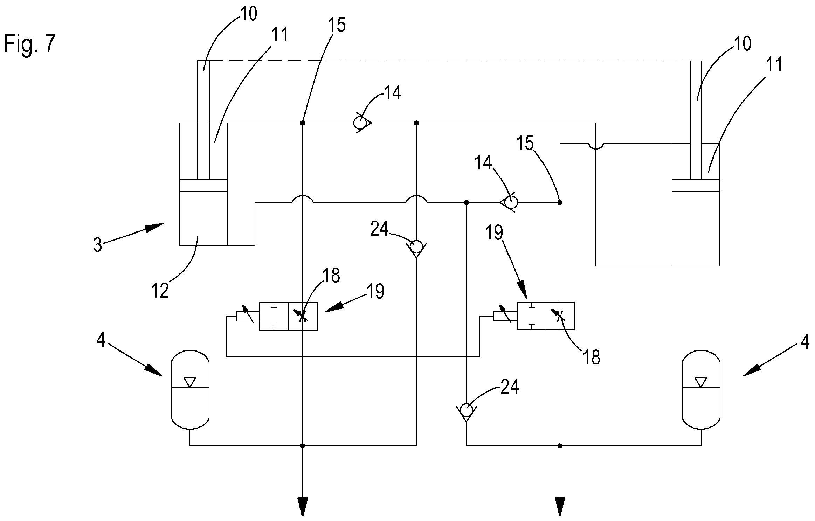

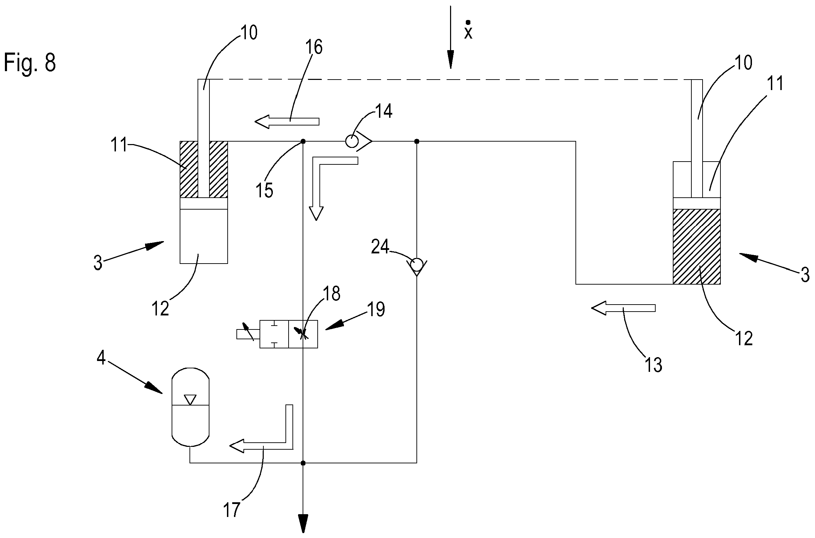

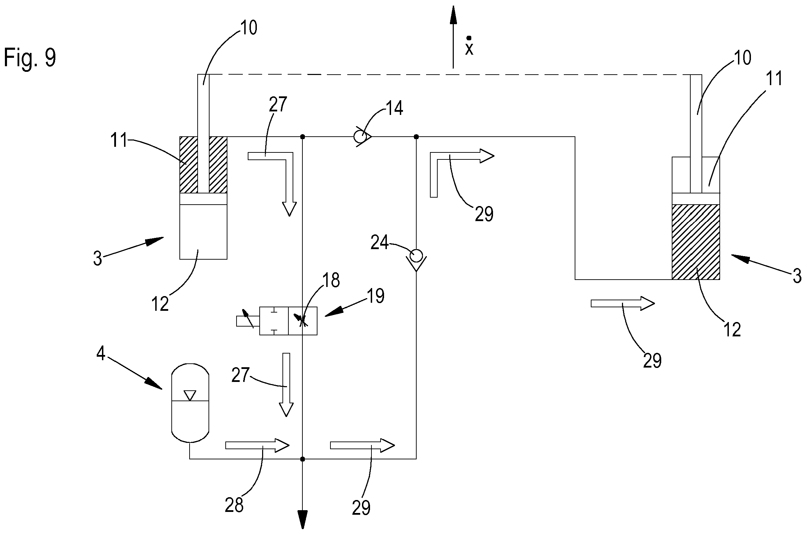

Figur 7 zeigt ein erfindungsgemäßes Federungssystem mit zwei Hydraulikzylindern 3, die mit einer Kreuzverschaltung verbunden sind. Die Funktionsweise dieser Kreuzverschaltung wird anhand der Figuren 8 und 9 erklärt, die zum besseren Verständnis vereinfacht dargestellt sind. Sie sind in dieser Form nicht vollständig und nicht funktionsfähig. Die vollständige, funktionsfähige Version ist in Figur 7 dargestellt.

Figur 8 zeigt eine vereinfachte Darstellung der Kreuzverschaltung beim Einfedern. Aus dem mit Blick auf Figur 8 rechten Hydraulikzylinder 3 wird ein Fluidstrom 13 aus dem Kolbenraum 12 des Hydraulikzylinders 3 erzeugt. An einer Verzweigung 15 teilt sich der Fluidstrom 13 in einen Teilstrom 16 zum Stangenraum 11 des mit Blick auf die Figur linken Hydraulikzylinders 3 auf und in einen Teilstrom 17 durch eine Drossel 18 des Drosselventils 19 zu einem Hydrospeicher 4. Sämtliche Rückflussverhinderer 14 sind beim Einfedern geöffnet. Sämtliche Rückflussverhinderer 24 sind beim Einfedern geschlossen und verhindern eine Bypassströmung der Fluidströme 13 unmittelbar zu einem Hydrospeicher 4, so dass die Fluidströme 13 gezwungen sind zunächst über ein Drosselventil 19 zu strömen.

Figur 9 zeigt eine vereinfachte Darstellung der Kreuzverschaltung beim Ausfedern. Entsprechend bewegen sich die Kolben 10 beider Hydraulikzylinder 3 nach oben. Aus dem mit Blick auf Figur 8 linken Hydraulikzylinder 3 strömt ein Fluidstrom 27 aus dem Stangenraum 11 über die Drossel 18 des Drosselventils 19. Der Fluidstrom 27 bildet mit einem weiteren Fluidstrom 28, der aus dem Hydrospeicher 24 zugespeist wird, einen Fluidstrom 29, welcher über den Rückflussverhinderer 24 zum Kolbenraum 12 des mit Blick auf Figur 8 rechten Hydraulikzylinders 3 fließt. Sämtliche Rückflussverhinderer 24 sind beim Ausfedern geöffnet. Sämtliche Rückflussverhinderer 14 sind beim Ausfedern geschlossen und verhindern eine Strömung der Fluidströme 27 direkt zum Kolbenraum 12, sodass die Fluidstrom 27 gezwungen sind, über eine Drossel 18 zu fließen.

## Patentansprüche

1. Federungssystem, insbesondere Kabinenfederung, umfassend mindestens einen ersten Hydraulikzylinder (3) mit einem Kolbenraum (12) und einem Stangenraum (11),
wobei der erste Hydraulikzylinder (3) mit mindestens einem Hydrospeicher (4) zum Einfedern und Ausfedern in Verbindung steht,
wobei der erste Hydraulikzylinder (3) mit mindestens einem weiteren Hydraulikzylinder (3) über eine Kreuzschaltung verbunden ist, wobei die Hydraulikzylinder (3) kreuzweise verschaltet sind und einen Fluidstrom von den Kolbenräumen (12) zu den Stangenräumen (11) der Hydraulikzylinder (3) ermöglicht,
und das System eine Verzweigung (15) aufweist zur Aufteilung eines Fluidstroms (13) aus dem Kolbenraum (12) in einen Teilstrom (16), der zu einem Stangenraum (11) des weiteren Hydraulikzylinders (3) fließt und einen Teilstrom (17), der durch ein Drosselventil (19) zu einem Hydrospeicher (4) fließt,
**dadurch gekennzeichnet, dass** in einem Fluidweg zwischen dem Kolbenraum (12) und dem Drosselventil (19) ein Rückflussverhinderer (14) angeordnet ist, der beim Einfedern öffnet und beim Ausfedern schließt.

2. Federungssystem nach Anspruch 1, **dadurch gekennzeichnet, dass** beim Ausfedern der gesamte Fluidstrom (27) aus dem Stangenraum (11) des jeweiligen Hydraulikzylinders (3) durch das Drosselventil (19) fließt.

3. Federungssystem nach einem der Ansprüche 1 oder 2, **dadurch gekennzeichnet, dass** in einem Fluidweg zwischen dem Kolbenraum (12) und dem Hydrospeicher (4) ein Rückflussverhinderer (24) angeordnet ist, der beim Einfedern schließt und beim Ausfedern öffnet.

4. Federungssystem nach einem der Ansprüche 1 bis 3, **dadurch gekennzeichnet, dass** in den Stangenräumen (11) eine Stange angeordnet ist, die nahezu den gleichen Querschnitt (26) aufweist wie Ringflächen (25), die um die Stange der Kolben (10) herum gebildet wird.

5. Federungssystem nach einem der Ansprüche 1 bis 4, **dadurch gekennzeichnet, dass** alle Fluidströme (17, 27), die beim Einfedern und Ausfedern durch das Drosselventil (19) fließen gleich groß sind.

6. Federungssystem nach einem der Anspruch 5, **dadurch gekennzeichnet, dass** die Verfahrgeschwindigkeit des Kolbens (10) beim Einfedern und Ausfedern gleich ist.

7. Federungssystem nach einem der Ansprüche 1 bis 6, **dadurch gekennzeichnet, dass** sich die Teilströme (16, 17) beim Einfedern im gleichen Verhältnis aufteilen, sodass der Teilstrom (16), der zu den Stangenräumen (12) fließt, genauso groß ist wie der Teilstrom (17), der durch die Drossel (19) zum Hydrospeicher (4) fließt.

## Claims

1. Suspension system, in particular cab suspension, comprising at least one first hydraulic cylinder (3) with a piston chamber (12) and a rod chamber (11),
wherein the first hydraulic cylinder (3) is connected to at least one hydraulic accumulator (4) for retraction and extension purposes,
wherein the first hydraulic cylinder (3) is connected to at least one further hydraulic cylinder (3) via a cross-connected circuit, wherein the hydraulic cylinders (3) are inter connected crosswise and permit a fluid flow from the piston chambers (12) to the rod chambers (11) of the hydraulic cylinders (3),
and the system has a branch (15) for dividing a fluid flow (13) from the piston chamber (12) into a partial flow (16) flowing to a rod chamber (11) of the further hydraulic cylinder (3) and into a partial flow (17) flowing through a throttle valve (19) to a hydraulic accumulator (4),
**characterized in that** a backflow preventer (14) is arranged in a fluid path between the piston chamber (12) and the throttle valve (19), said backflow preventer opening during the retraction operation and closing during the extension operation.

2. Suspension system according to Claim 1, **characterized in that** during the extension operation, the entire fluid flow (27) flows out of the rod chamber (11) of the respective hydraulic cylinder (3) through the throttle valve (19).

3. Suspension system according to either of Claims 1 and 2, **characterized in that** a backflow preventer (24) is arranged in a fluid path between the piston chamber (12) and the hydraulic accumulator (4), said backflow preventer closing during the retraction operation and opening during the extension operation.

4. Suspension system according to one of Claims 1 to 3, **characterized in that** a rod is arranged in the rod chambers (11), the rod having virtually the same cross section (26) as annular surfaces (25) formed around the rod of the pistons (10).

5. Suspension system according to one of Claims 1 to 4, **characterized in that** all of the fluid flows (17, 27) which flow through the throttle valve (19) during the retraction operation and extension operation are identical in size.

6. Suspension system according to one of Claim 5, **characterized in that** movement speed of the piston (10) is identical during the retraction operation and extension operation.

7. Suspension system according to one of Claims 1 to 6, **characterized in that** the partial flows (16, 17) are divided in an identical proportion during the retraction operation such that the partial flow (16) flowing to the rod chambers (12) is precisely the same size of the partial flow (17) flowing through the throttle (19) to the hydraulic accumulator (4).

## Revendications

1. Système de suspension, en particulier suspension de cabine, comprenant au moins un premier vérin hydraulique (3) avec une chambre de piston (12) et une chambre de tige (11), le premier vérin hydraulique (3) étant en liaison avec un accumulateur hydraulique (4) pour la compression et le rebond,
le premier vérin hydraulique (3) étant en liaison avec au moins un vérin hydraulique supplémentaire (3) par le biais d'un montage en croix dans lequel les vérins hydrauliques (3) sont montés en croix et permettant un écoulement de fluide depuis les chambres de piston (12) vers les chambres de tige (11) des vérins hydrauliques (3),
et le système présentant un branchement (15) pour diviser un écoulement de fluide (13) hors de la chambre de piston (12) en un écoulement partiel (16) qui s'écoule vers une chambre de tige (11) du vérin hydraulique supplémentaire (3) et en un écoulement partiel (17) qui s'écoule à travers une soupape d'étranglement (19) vers un accumulateur hydraulique (4),
**caractérisé en ce qu'**un dispositif antireflux (14) est disposé dans une voie de fluide entre la chambre de piston (12) et la soupape d'étranglement (19), lequel s'ouvre lors de la compression et se ferme lors du rebond.

2. Système de suspension selon la revendication 1, **caractérisé en ce que** lors du rebond, la totalité de l'écoulement de fluide (27) provenant de la chambre de tige (11) du vérin hydraulique respectif (3) s'écoule à travers la soupape d'étranglement (19) .

3. Système de suspension selon l'une quelconque des revendications 1 et 2, **caractérisé en ce qu'**un dispositif antireflux (24) est disposé dans une voie de fluide entre la chambre de piston (12) et l'accumulateur hydraulique (4), lequel se ferme lors de la compression et s'ouvre lors du rebond.

4. Système de suspension selon l'une quelconque des revendications 1 à 3, **caractérisé en ce que** dans les chambres de tige (11) est disposée une tige qui présente presque la même section transversale (26) que les surfaces annulaires (25) qui sont formées autour de la tige de piston (10).

5. Système de suspension selon l'une quelconque des revendications 1 à 4, **caractérisé en ce que** tous les écoulements de fluide (17, 27) qui s'écoulent lors de la compression et du rebond à travers la soupape d'étranglement (19) sont de même grandeur.

6. Système de suspension selon l'une de la revendication 5, **caractérisé en ce que** la vitesse de déplacement du piston (10) lors de la compression et du rebond est identique.

7. Système de suspension selon l'une quelconque des revendications 1 à 6, **caractérisé en ce que** les écoulements partiels (16, 17), lors de la compression, se divisent en un rapport identique de telle sorte que l'écoulement partiel (16) qui s'écoule vers les chambres de tige (12) soit aussi grand que l'écoulement partiel (17) qui s'écoule à travers l'étranglement (19) vers l'accumulateur hydraulique (4).
